# EUROPEAN PATENT SPECIFICATION

(11) **EP 1 145 614 B1**
(45) Date of publication and mention of the grant of the patent: **28.07.2004**
(21) Application number: 01201326.4
(22) Date of filing: 11.04.2001
(51) Int. Cl.: A01C 17/00

(54) **Apparatus for distributing particulate fertilizer**
Vorrichtung zum Verteilen von körnigem Dünger
Appareil pour épandre des engrais granulaires

(30) Priority: 12.04.2000 NL 1014921
(43) Date of publication of application: 17.10.2001
(73) Proprietor: Kverneland Nieuw-Vennep B.V., 2153 LR Nieuw-Vennep (NL)
(72) Inventor: Mijnders, Gijsbert Jan, 2161 KE Lisse (NL); Bruin, Albert Derk, 5261 XG Vught (NL); Klein Breteler, Antonius Johannes, 2628BL DELFT (NL)
(74) Representative: Voncken, Bartholomeus Maria Christiaan

(56) References cited:
- EP-A- 0 329 072
- EP-A- 0 873 678
- FR-A- 1 178 177
- FR-A- 2 334 589
- US-A- 2 031 540
- US-A- 2 766 872
- US-A- 6 047 909

## Description

The invention relates to an apparatus for distributing particulate fertilizer, comprising at least one substantially horizontal distributor disc to be driven about an axis of rotation, on the surface of which substantially radially extending blades are present, and feed means for feeding the fertilizer to be distributed to the surface of the distributor disc on which said blades are present.

Although the invention will be discussed in relation to the distribution of fertilizer hereinafter, it should be understood that the invention can also be used for distributing other particulate materials, such as seeds or granulates of pesticides and/or herbicides.

Apparatuses of the above type are known in widely varying forms thereof. Such apparatuses are used for distributing fertilizer over agricultural land. The last few years it has become increasingly important, inter alia because of stricter environmental legislation, to have the distribution of the fertilizer take place in an exactly measured manner (location-specific distribution). Overdressing must be prevented in this manner, whilst at the same time a maximum yield can be obtained from a parcel of land.

In order to enable measured fertilizer distribution by means of apparatuses of the type to which the invention relates, it is necessary to control the distance over which the fertilizer is ejected by the distributor disc on the one hand and the direction in which the fertilizer is ejected on the other hand. The adjustment of an exact throwing distance can be realised in an acceptable manner with the prior art apparatuses, for example by varying the diameter of the distributor discs and varying the rotational speed thereof. On the other hand, the exact determination of a desired throwing direction involves problems which so far could not be solved in a satisfactory manner. In itself it is conceivable to mount guides round the distributor disc, which ensure that the fertilizer that is being ejected by the distributor disc is guided in a specific direction. With many types of fertilizer, however, such guides are disadvantageous, because they cause damage to the fertilizer, which as a result is reduced in size or even becomes powdery, so that an effective distribution is no longer possible.

With a prior art apparatus of the present kind, which is being used on a large scale, the means for feeding the fertilizer to be distributor consist of a radially extending feed slot, which is located close to the centre of the distributor disc. One drawback thereof is the fact that it depends on the position of the radially extending blades relative to the feed slot how long it takes before a blade makes contact with the fertilizer that flows out of said slot. As a result, also the point in time at which the fertilizer leaves the blade in question at the outer end thereof will vary, which causes the throwing direction to vary strongly.

It is an object of the present invention to provide an apparatus of the present type by means of which the throwing direction can be determined very precisely.

In order to accomplish that objective, the apparatus according to the invention is characterized in that said feed means are made up of an axially extending feed opening, which is substantially diamond-shaped in section, wherein
- a first side is formed by a straight line, which extends from a circle having a first radius, which is concentric with the axis of rotation, until a circle having a larger, second radius, which is concentric with the axis of rotation, and which includes a positive angle with the radial extending through the end of said first side at said circle having the first radius, seen in the direction of rotation,
- a second side lying opposite and offset said first side extends in a corresponding manner as said first side, that is, between said circles, and it includes a positive angle with the radial extending through the end of said second side at said circle having the first radius, seen in the direction of rotation, and
- a third side and a fourth side, which lie opposite each other, are formed by circular arcs which interconnect the ends of said first and second sides. The feed opening thus formed, which is substantially diamond-shaped in section, leads to controlled feeding of the fertilizer to be distributed to the distributor disc blades, such that it has surprisingly become apparent that the throwing direction varies within very narrow bounds. Theoretically it can be deduced that fertilizer which is supplied at the location of a first side of the feed opening will be ejected in the same direction. In a corresponding manner it obtains that fertilizer which is supplied at the location of the second side will likewise be ejected in the same direction (which is different from the first throwing direction, however). The difference between the first and the second throwing directions corresponds to the aforesaid angle of displacement between the first and the second side.

If fertilizer would be supplied only via said first side (or only via said second side), all the fertilizer would leave the distributor disc in the same throwing direction. Such linear feeding leads to a very small feed capacity, however, so that in practice the feed opening has the aforesaid diamond-shaped configuration.

The apparatus may comprise at least two feed openings, however, so that it is possible to distribute fertilizer in different directions.

Preferably, said blades extend at least until the circle having the first radius with their inner ends. This further enhances the precision with which the desired throwing angle can be determined.

In a preferred embodiment of the apparatus according to the invention, the position of the feed opening with respect to the distributor disc is adjustable. Such adjustability makes it possible to vary both the throwing direction and the throwing distance. It is easy to see that an adjustment in tangential direction results in a different throwing direction; similarly it obtains that an adjustment in radial direction results in a different throwing distance, among other things, since the velocity at which the fertilizer leaves the blades is varied. A different adjustment of the position of the feed opening with respect to the distributor disc may also have a combined effect.

Furthermore, the feed opening preferably comprises metering means. Such metering means make it possible to vary the amount of fertilizer that is distributed by the distributor disc. This provides an additional possibility of changing the amount of fertilizer with which the land is being dressed.

Such metering means may consist of regulating means for increasing or decreasing the amount of fertilizer that is supplied to the feed opening. It is also conceivable, however, to vary the dimensions of the feed opening itself. When the length of the first and the second side is varied, for example, there will be a corresponding variation of the amount of fertilizer that is distributed by the apparatus per unit of time. By varying the length of the circular arc-shaped third and fourth sides, it becomes possible to vary the throwing angle (the angle between extreme throwing directions) within which the fertilizer is distributed.

The apparatus according to the invention makes it possible to distribute fertilizer over a precisely defined throwing distance and within a small throwing angle (for example 9°). In this way it is possible to apply a desired amount of fertilizer to a narrow strip of land, for example. Such a manner of distributing fertilizer is also referred to as "swath distribution". If different amounts of fertilizer are to be applied to a number of strips of lands lying adjacently to each other, it will be advantageous to use an embodiment of the apparatus according to the invention wherein a number of distributor discs and associated feed openings are disposed one above another. By dimensioning the distributor discs differently, each distributor disc will distribute fertilizer over a different throwing distance, eventually forming a number of "swaths" adjacently to each other on the land. It is also possible, of course, to use different throwing directions or throwing angles for the various distributor discs. The aforesaid swaths may also overlap so as to ensure a desired distribution of the fertilizer.

Thus it is also possible to obtain an embodiment of the apparatus according to the invention which is intended for being moved by a tractor or the like, and which is adapted to form a spreading pattern whose dimension in the direction transversely to the direction of movement is considerably larger than the dimension in the direction of movement.

The term "dimensioning differently " not only refers to different dimensions of the distributor discs, but also to different configurations thereof. Thus, distributor discs having differently configured blades are conceivable besides distributor discs having varying diameters. Also the number of blades per distributor disc may vary. Furthermore it is conceivable to drive the distributor discs at mutually different rotational speeds.

From a constructional viewpoint it is advantageous, however, if the distributor discs are mounted on a common rotary shaft.

Finally,a special embodiment of the apparatus according to the invention is mentioned in which each blade is curved, comprising a rearwardly arcuate inner portion and a forwardly arcuate outer portion.

At the location of said rearwardly arcuate inner portion, the fertilizer that is being supplied to the distributor disc in axial direction through the feed opening includes a velocity component in outward direction along said inner portion, which velocity component helps to accelerate the fertilizer in outward direction. If the inner portion would be configured to have a forwardly arcuate orientation, the respective velocity component would be of opposite sense to the centrifugal force and would initially oppose the outward movement of the fertilizer. The velocity of the fertilizer at the location of the radially outward portion of the blade is the vector sum of the velocity in relation to the blade and the circumferential velocity of the blade resulting from the rotation of the distributor disc. In the case of a forwardly arcuate orientation said vector sum appears to be larger than in the case of a rearwardly arcuate orientation; consequently, a rearwardly arcuate orientation of the outer portion of the blade results in a larger throwing distance, or in other words, a smaller diameter of the distributor disc or a lower rotational speed will suffice to achieve a desired throwing distance.

The invention will now be explained in more detail with reference to the drawing, which shows an embodiment of an distributor disc including a feed opening according to the invention.
Fig. 1 is a schematic top plan view of an embodiment of an distributor disc including a feed opening according to the invention;
Figs. 2 - 4 elucidate theoretical backgrounds with regard to the configuration of the feed opening;
Fig. 5 schematically shows a blade as used;
Fig. 6 is a schematic, sectional view of an embodiment of the apparatus according to the invention, which comprises five distributor discs; and
Fig. 7 shows a spreading pattern realised by means of the apparatus according to Fig. 6.

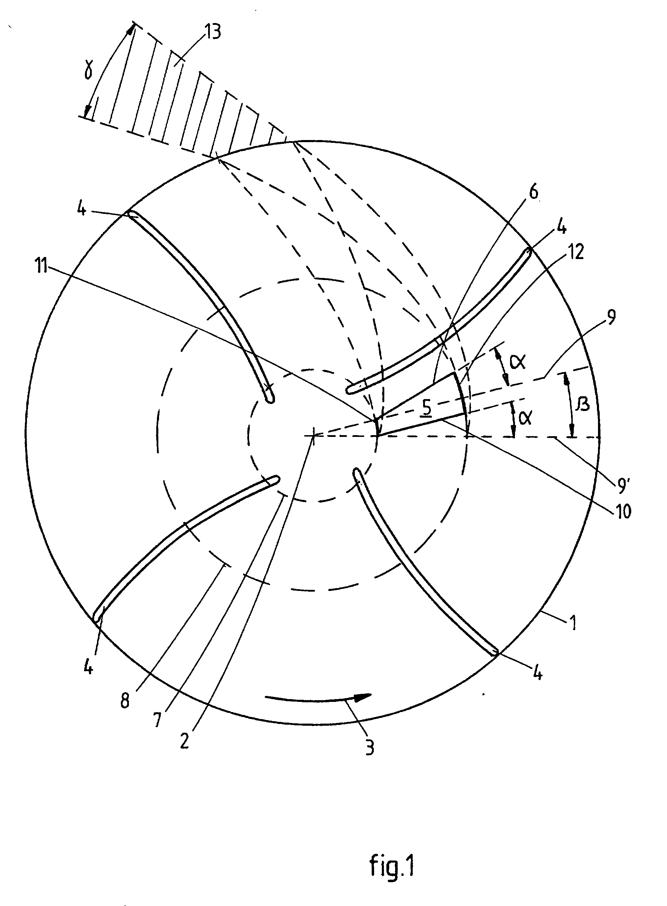

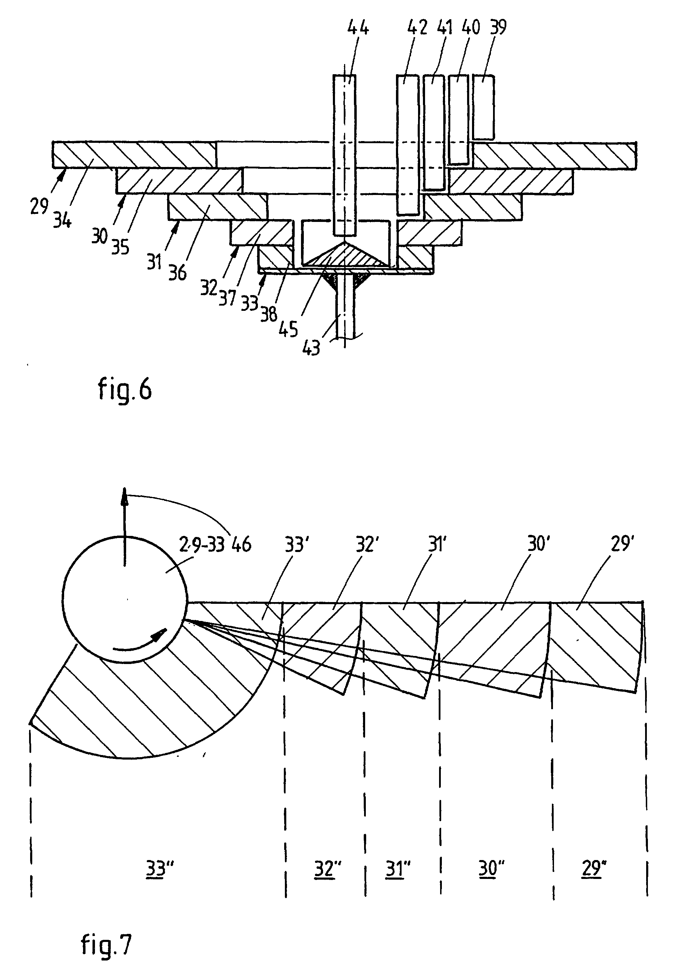

Fig. 1 shows in a schematic top plan view a distributor disc 1, which forms part of an apparatus for distributing particulate fertilizer. Distributor disc 1 can be driven about an axis of rotation 2 in the direction of rotation that is indicated by arrow 3. Present on the surface of distributor disc 1 are a number (four in this embodiment) regularly spaced-apart, substantially radially extending blades 4. The configuration of said blades will be discussed later with reference to Fig. 5.

The particulate fertilizer to be distributed is supplied to the distributor disc 1 through an axially extending feed opening 5 located above said disc (in Fig. 1 only the circumference of the feed opening is shown). Said feed opening 5 is substantially diamond-shaped in section. Said diamond-shaped section is built up as follows. A first side 6 is formed by a straight line, which extends from a circle 7 having a first radius, which is concentric with axis of rotation 2, until a circle 8 having a larger second radius, which is concentric with said axis of rotation. Said line 6 includes a positive angle with a radial 9, seen in the direction of rotation 3. A second side 10 lying opposite said first side 6 extends in a similar manner, that is, likewise between circles 7 and 8, and it likewise includes an angle with a radial 9'. Said second side 10 is offset through an angle of displacement in the direction of rotation. A third side 11 and a fourth side 12 of the diamond-shaped feed opening 5 are finally formed by arcs of the circles 7 and 8.

It has now become apparent that fertilizer that is supplied through the feed opening 5 having the above-described configuration leaves the distributor disc 1 in an area 13 at an throwing angle which equals the angle of displacement Consequently, it can be said that the smaller the extent to which the sides 6 and 10 are offset relative to each other in the direction of rotation of the distributor disc 1 (the smaller the angle , therefore), the smaller the throwing angle will be. If the two sides 6 and 10 would coincide, all fertilizer would leave the distributor disc in the same direction ( = 0). A specific minimum distance between said sides must be maintained, however, in order to allow a specific amount of fertilizer to pass through the feed opening.

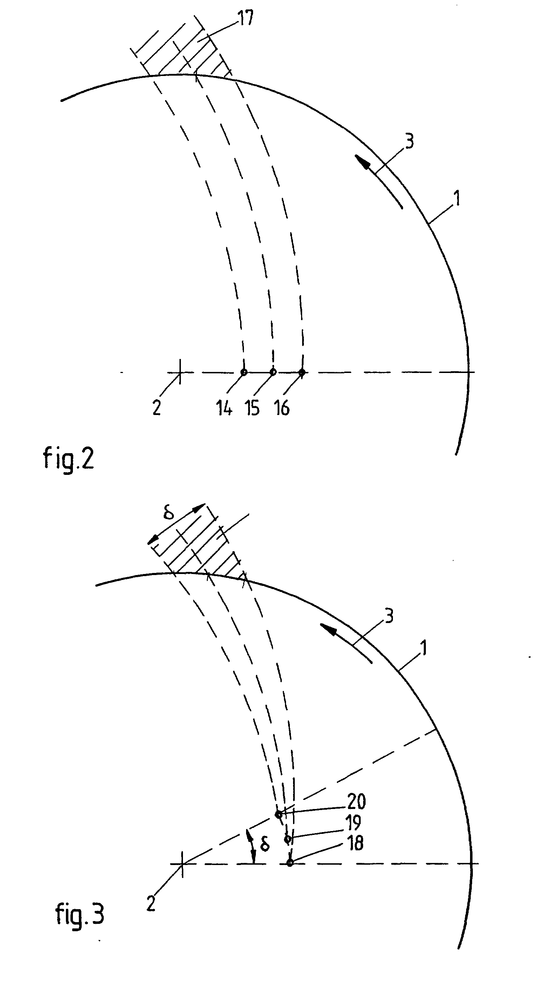

The background of the above-described, substantially diamond-shaped section of the feed opening 5 will now be explained in more detail with reference to Figs. 2 - 4.

Fig. 2 shows an distributor disc 1 comprising three fertilizer feed positions 14, 15 and 16, which are radially offset with respect to said distributor disc. Such a radial variation of the feed position of the fertilizer automatically leads to a variation of the position at which the fertilizer leaves the distributor disc 1 (area 17). After all, fertilizer being supplied at position 16 is already located further outwards on distributor disc, and consequently it only needs to travel a shorter distance along a blade, as a result of which it will leave the blade at the outer end thereof at an earlier time. At that time, distributor disc 1 will have rotated less far than it will have when fertilizer that has been supplied at a radially further inward position, for example position 14, leaves the blade.

Fig. 3 shows tangentially offset (but radially unchanged) feed positions 18, 19 and 20. It will not be surprising that the area 47, within which the fertilizer leaves the distributor disc 1 in such a case, includes an throwing angle which equals the difference in angular displacement between feed positions 18 and 20.

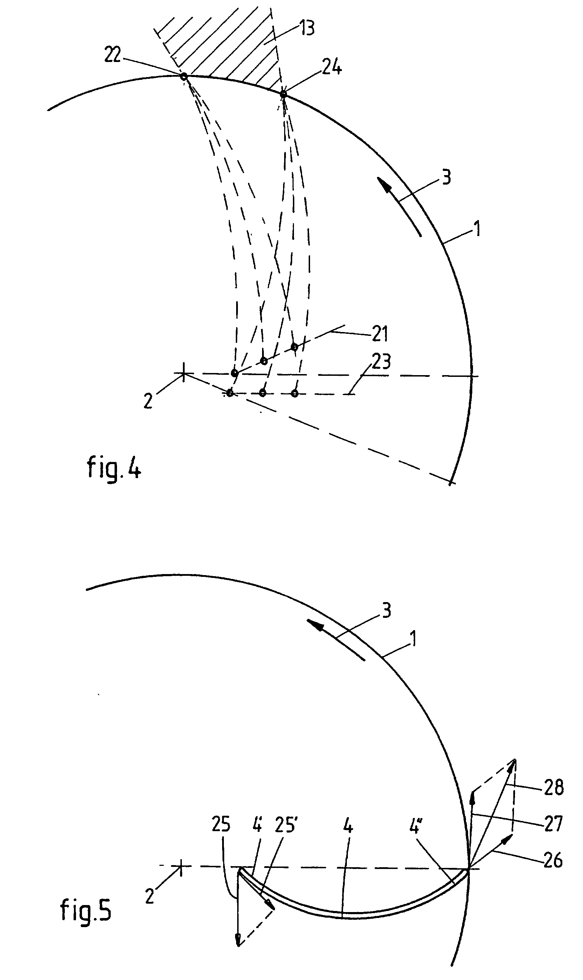

Consequently it is apparent from Fig. 2 that the further radially outward the feed position, the sooner the fertilizer will leave the distributor disc 1. From Fig. 3 it is apparent that the later the tangential position of the feed position, seen in the direction of rotation 3, the later the fertilizer will leave the distributor disc 1. A combination of the two possibilities makes it possible to define a line 21 (Fig. 4) of possible feed positions, which lead to an identical point at which the fertilizer leaves the distributor disc 1. Said point is indicated at 22 in Fig. 4. Said line 21 corresponds, for example, to the first side 6 of feed opening 5 in Fig. 1. A comparable line 23 of feed positions correspondingly leads to a point 24, at which the fertilizer leaves the distributor disc 1. Said line 23 corresponds to the side 10 of the feed opening 5 of Fig. 1 in that case.

As is furthermore shown in Fig. 1, the position of the feed opening 5 is such that the blades 4 extend at least until circle 7 having a first radius with their inner ends. In this manner it is ensured that all the fertilizer that flows from feed opening 5 will be in the path of the blades 4. If this should not be the case, it would lead to an undesirable distribution of the fertilizer at a large throwing angle.

The position of the feed opening 5 with respect to distributor disc 1 may be adjustable. When the feed opening 5 is shifted in tangential direction, for example, also the position of the throwing area 13 will be changed accordingly (in the main, the throwing angle will not change). Generally the throwing distance will change when the feed opening is shifted in radial direction (although this will usually affect the throwing position as well).

Furthermore, metering means (not shown) can be employed in feed opening 5, or the dimension of feed opening 5 itself can be varied so as to change the amount of fertilizer to be supplied to the disc 1 per unit time.

Fig. 5 schematically shows the shape of a blade 4. As the figure shows, the inner portion 4' of the blade 4 has a rearwardly arcuate orientation. As a result, the velocity 25 (exaggerated; in fact it is lower than the velocity 27 that will be discussed later) of the fertilizer being supplied (which itself only has a velocity perpendicularly to the plane of the drawing at that point in time) relative to rotating blade 4 includes an outward velocity component 25', which has been resolved along the inner portion 4' of the blade 4. The outward, centrifugal movement of the fertilizer is thus supported. If the inner portion 4' of the blade 4 were to have a forwardly arcuate orientation, said component 25' would be directed inwards and thus oppose the outward movement of the fertilizer, which should be prevented.

At the location of the outer end of blade 4, the fertilizer on the one hand has a velocity 25 relative to the outer portion 4'' of the blade (owing to the centrifugal acceleration), whilst on the other hand it has a velocity 27 resulting from the rotation of the distributor disc 1. The overall velocity of the fertilizer is the vector sum 28, therefore. If the outer portion 4'' of the blade 4 would have a rearwardly arcuate orientation rather than a forwardly arcuate orientation, said vector sum 28 would be smaller, as a result of which the throwing distance would be smaller, given the same diameter of the distributor disc 1 and the same rotational speed thereof. Or, in other words: the blade configuration as shown in Fig. 5 makes it possible to effect a maximum throwing distance with a minimum diameter of the distributor disc 1 and a minimum rotational speed thereof.

Also other blade configurations are possible, of course. Furthermore it is possible to vary the number of blades per distributor disc. Generally, however, there is a minimum limit as regards the number of blades to be used, which depends, among other things, on the blade height and the rotational speed (in order to prevent the fertilizer being supplied from falling onto the distributor disc surface at a location between successive blades and moving in an uncontrolled manner).

Fig. 6 finally shows a sectional view of an apparatus comprising five distributor discs 29 - 32 disposed one above another, which are each fitted with blades 34 - 38. The four upper distributor discs 29 - 32 are intended to distribute fertilizer at small throwing angles, as described in the foregoing. Respective axial feed openings 39 - 42 co-operate with the respective distributor discs 29 - 32 in the aforesaid manner. The distributor discs are mounted on a common rotary shaft 43, and they rotate at the same speed. Due to the differences in diameter, the fertilizer will be ejected over different distances, so that swaths of fertilizer lying adjacently to each other will be formed on the land. The lowermost disc 33 having the smallest diameter is provided with a feed element 44, which supplies the fertilizer in radial direction to the blades 38 via a central, wedge-shaped member 45. This makes it possible to achieve a large spreading angle with this distributor disc.

In combination, the distributor discs 29 - 33 provide a desired spreading pattern, as schematically shown in Fig. 7, for example. This figure is a top plan view of the stack of distributor discs 29 - 33 and the spreading areas 29' - 33' formed by said discs. Eventually, a spreading pattern comprising so-called swaths 29" is obtained. Said swaths may overlap to any desired extent so as to obtain a desired pattern of fertilizer distribution over the land.

A tractor may be fitted with two such apparatuses disposed beside each other, of course, so that a symmetric distribution pattern is obtained.

The invention is not restricted to the embodiments as described above, which can be varied in several ways without departing from the scope of the invention as defined in the claims. Thus it would be possible to use conventional feed means in combination with the feed opening(s) according to the invention.

## Claims

1. Apparatus for distributing particulate fertilizer, comprising at least one substantially horizontal distributor disc to be driven about an axis of rotation, on the surface of which substantially radially extending blades are present, and feed means for feeding the fertilizer to be distributed to the surface of the distributor disc on which said blades are present, **characterized in that** said feed means are made up of an axially extending feed opening, which is substantially diamond-shaped in section, wherein
- a first side is formed by a straight line, which extends from a circle having a first radius, which is concentric with the axis of rotation, until a circle having a larger, second radius, which is concentric with the axis of rotation, and which includes a positive angle with the radial extending through the end of said first side at said circle having the first radius, seen in the direction of rotation,
- a second side lying opposite and offset said first side extends in a corresponding manner as said first side, that is, between said circles, and it includes a positive angle with the radial extending through the end of said second side at said circle having the first radius, seen in the direction of rotation, and
- a third side and a fourth side, which lie opposite each other, are formed by circular arcs which interconnect the ends of said first and second sides.

2. Apparatus according to claim 1, **characterized in that** said apparatus comprises at least two feed openings.

3. Apparatus according to claim 1 or 2, **characterized in that** said blades extend at least until the circle having the first radius with their inner ends.

4. Apparatus according to any one of the preceding claims, **characterized in that** the position of the feed opening with respect to the distributor disc is adjustable.

5. Apparatus according to any one of the preceding claims, **characterized in that** the feed opening comprises metering means.

6. Apparatus according to any one of the preceding claims, **characterized in that** a number of distributor discs and associated feed openings are disposed one above another.

7. Apparatus according to claim 6, intended for being moved by a tractor or the like, **characterized in that** said apparatus is adapted to form a spreading pattern whose dimension in the direction transversely to the direction of movement is considerably larger than the dimension in the direction of movement.

8. Apparatus according to claim 6 or 7, **characterized in that** said distributor discs are mounted on a common rotary shaft.

9. Apparatus according to any one of the preceding claims, **characterized in that** each blade is curved, comprising a rearwardly arcuate inner portion and a forwardly arcuate outer portion.

## Patentansprüche

1. Vorrichtung zum Verteilen von Festkörperdünger, umfassend wenigstens eine um eine Drehachse anzutreibende im Wesentlichen horizontale Verteilerscheibe auf deren Oberfläche sich im Wesentlichen radial erstreckende Schaufeln vorgesehen sind und eine Speiseeinrichtung zum Fördern des zu verteilenden Düngers zu der Oberfläche der Verteilerscheibe auf der,die Schaufeln vorgesehen sind, **dadurch gekennzeichnet, dass** die Speiseeinrichtung aus einer sich axial erstreckenden Speiseöffnung aufgebaut ist, die im Querschnitt im Wesentlichen diamantförmig ist, wobei
- eine erste Seite durch eine gerade Linie gebildet ist, die sich von einem Kreis mit einem ersten Radius, der zu der Drehachse konzentrisch ist bis zu einem Kreis mit einem größeren, zweiten Radius, der konzentrisch zu der Drehachse ist erstreckt und die einen positiven Winkel zu der radialen Erstreckung durch das Ende der ersten Seite an dem Kreis mit dem ersten Radius, gesehen in der Drehrichtung aufweist,
- sich eine zweite Seite, die der ersten Seite gegenüberliegt und dazu versetzt ist in einer entsprechenden Art und Weise wie die erste Seite erstreckt, d.h. zwischen den Kreisen und die einen positiven Winkel zu der radialen Erstreckung durch das Ende der zweiten Seite an dem Kreis mit dem ersten Radius, gesehen in der Drehrichtung aufweist, und
- eine dritte Seite und eine vierte Seite, die gegenüber voneinander liegen und durch kreisförmige Bögen ausgebildet sind, die die Enden der ersten und zweiten Seite verbinden.

2. Vorrichtung nach Anspruch 1, **dadurch gekennzeichnet, dass** die Vorrichtung wenigstens zwei Speiseöffnungen umfasst.

3. Vorrichtung nach Anspruch 1 oder 2, **dadurch gekennzeichnet, dass** sich die Schaufeln mit ihren inneren Enden wenigstens bis zu dem Kreis mit dem ersten Radius erstrecken.

4. Vorrichtung nach einem der vorstehenden Ansprüche, **dadurch gekennzeichnet, dass** die Position der Speiseöffnung in Bezug auf die Verteilerscheibe einstellbar ist.

5. Vorrichtung nach einem der vorstehenden Ansprüche, **dadurch gekennzeichnet, dass** die Speiseöffnung eine Dosiereinrichtung umfasst.

6. Vorrichtung nach einem der vorstehenden Ansprüche, **dadurch gekennzeichnet, dass** mehrere Verteilerscheiben und dazugehörige Speiseöffnungen übereinander angeordnet sind.

7. Vorrichtung nach Anspruch 6, die dazu gedacht ist durch einen Traktor oder Ähnliches bewegt zu werden, **dadurch gekennzeichnet, dass** die Vorrichtung dazu geeignet ist ein Streumuster zu bilden, das in einer Dimension in der Richtung quer zur Bewegungsrichtung merklich größer ist als in einer Dimension in der Bewegungsrichtung.

8. Vorrichtung nach Anspruch 6 oder 7, **dadurch gekennzeichnet, dass** die Verteilerscheiben an einer herkömmlichen Drehachse angebracht sind.

9. Vorrichtung nach einem der vorstehenden Ansprüche, **dadurch gekennzeichnet, dass** jede Schaufel gekrümmt ist, so dass sie einen nach hinten gekrümmten inneren Abschnitt und einen nach vorne gekrümmten äußeren Abschnitt umfassen.

## Revendications

1. Appareil de distribution de fertilisants en particules, comprenant au moins un disque de distribution sensiblement horizontal entraîné autour d'un axe de rotation, sur la surface duquel se trouvent des lames s'étendant sensiblement radialement et des moyens d'alimentation pour alimenter le fertilisant à distribuer vers la surface du disque du distributeur sur lequel se trouvent lesdites lames, **caractérisé en ce que** lesdits moyens d'alimentation sont constitués d'une ouverture d'alimentation s'étendant axialement, dont la section est sensiblement en forme de diamant, dans lequel,
- un premier côté est formé d'une ligne droite qui s'étend d'un cercle ayant un premier rayon, qui est concentrique à l'axe de rotation, jusqu'à un cercle ayant un second rayon plus important, qui est concentrique à l'axe de rotation, et qui comprend un angle positif avec l'extension radiale traversant l'extrémité dudit premier côté au niveau dudit cercle ayant le premier rayon, vu dans le sens de rotation,
- un deuxième côté situé en face et décalé, ledit premier côté s'étend de manière similaire audit premier côté, c'est à dire entre lesdits cercles, et il comprend un angle positif avec l'extension radiale traversant l'extrémité dudit second côté au niveau dudit cercle ayant le premier rayon, vu dans le sens de la rotation, et
- un troisième côté et un quatrième côté qui se trouvent en face l'un de l'autre, sont formés par des arcs de cercle qui relient les extrémités desdits premier et deuxième côtés.

2. Appareil selon la revendication 1, **caractérisé en ce que** ledit appareil comprend au moins deux ouvertures d'alimentation.

3. Appareil selon la revendication 1 ou 2, **caractérisé en ce que** lesdites lames s'étendent au moins jusqu'au cercle ayant le premier rayon avec leurs extrémités internes.

4. Appareil selon l'une des revendications précédentes, **caractérisé en ce que** la position de l'ouverture d'alimentation par rapport au disque de distributeur est ajustable.

5. Appareil selon l'une des revendications précédentes, **caractérisé en ce que** l'ouverture d'alimentation comprend un moyen de dosage.

6. Appareil selon l'une des revendications précédentes, **caractérisé en ce que** plusieurs disques de distributeur et les ouvertures d'alimentation correspondantes sont disposés les uns sur les autres.

7. Appareil selon la revendication 6, destiné à être déplacé par un tracteur ou autre, **caractérisé en ce que** ledit appareil est adapté à former un motif d'épandage dont la dimension dans la direction transversale par rapport à la direction du mouvement est considérablement plus importante. que la dimension dans la direction du mouvement.

8. Appareil selon la revendication 6 ou 7, **caractérisé en ce que** lesdits disques de distributeur sont montés sur un arbre rotatif commun.

9. Appareil selon l'une des revendications précédentes, **caractérisé en ce que** chaque lame est incurvée, comprenant une partie interne arquée vers l'arrière et une partie externe arquée vers l'avant.
